# EUROPÄISCHE PATENTANMELDUNG

(11) **EP 3 721 953 A1**
(43) Veröffentlichungstag der Anmeldung: **14.10.2020**
(21) Anmeldenummer: 20020161.4
(22) Anmeldetag: 08.04.2020
(51) Int. Cl.: A63C 17/01, A63C 17/04, A63C 17/26

(54) **UMWANDELBARES ROLLBRETT**

(30) Priorität: 10.04.2019 DE 102019002630
(71) Anmelder: Pascher + Heinz GmbH, 81829 München (DE)
(72) Erfinder: Pascher, Reinhard, 85540 Salmdorf/Haar (DE); Schirrmacher, Tao, 80339 München (DE)
(74) Vertreter: von Bülow, Tam

(57) **Zusammenfassung**

Ein zwischen einem Roller und einem Skateboard umwandelbares Rollbrett hat einen am Trittbrett (2) schwenkbar gelagerten Bügel (8) der zwischen einer ersten Rollerstellung einer zweiten Skateboardstellung schwenkbar ist. Der Bügel (8) ist um einen Betrag länger als das Trittbrett (2), sodass er in der Skateboard-stellung zwischen sich und dem Ende des Trittbrettes (2) einen Freiraum (11) bildet, der so groß ist, dass durch ihn hindurch das Rollbrett (2) erfasst und getragen werden kann.

## Beschreibung

Die Erfindung betrifft ein umwandelbares Rollbrett gemäß dem Oberbegriff des Patentanspruches 1.

DE 100 808 36 B4 beschreibt eine umwandelbare Skateboard/Roller-Vorrichtung mit einer Grundplatte und einem Griff, der mit der Grundplatte verbunden ist und zwischen einer ersten Rollerstellung und einer zweiten, verstauten Stellung bewegbar ist, wobei sich der Griff in der Rollerstellung von der Grundplatte nach oben erstreckt und von einem auf der Grundplatte stehende Benutzer erfasst werden kann und wobei die Oberseite, wenn sich der Griff in der zweiten verstauten Stellung befindet, nicht durch den Griff versperrt ist und für einen Benutzer der Skateboard/Roller-Vorrichtung zugänglich ist. Der Griff erstreckt sich in der verstauten Stellung parallel zu einer Längsseite der Grundplatte und parallel zur Hinterseite der Grundplatte. Er ist somit in etwa L-förmig.

Die DE 299 236 931 U1 zeigt ein Rollbrett mit zwei Vorderrädern und einem Hinterrad. Die Vorderräder sind an einem schwenkbaren Achsschenkel gelagert. Eine Steuerung erfolgt ausschließlich durch Gewichtsverlagerung des Fahrers. Eine starr mit dem Rollbrett verbundenen Stange dient ausschließlich der Bequemlichkeit des Fahrers.

Aufgabe der Erfindung ist es, eine umwandelbare Skateboard/Roller-Vorrichtung zu schaffen, die einfach und sicher zu bedienen und auch einfach zu transportieren ist. Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Grundgedanke der Erfindung ist es, einen Bügel vorzusehen, der am vorderen Bereich des Rollbrettes schwenkbar gelagert ist und eine Länge aufweist, die größer ist als die Länge des Rollbrettes. Damit ergibt sich im heruntergeklappten Zustand zwischen der Hinterseite des Rollbrettes und dem Bügel ein Freiraum durch den hindurch der Bügel von einer Hand erfasst werden kann.

Zusätzlich hat der Bügel eine Querstrebe, die im heruntergeklappt Zustand auf der Oberseite des Rollbrettes aufliegt, sodass die heruntergeklappte Stellung des Bügels begrenzt und eindeutig definiert ist.

Der Bügel hat bei einem Ausführungsbeispiel der Erfindung etwa die Form eines Gabelbaumes. Bei einer anderen Variante der Erfindung ist der Bügel in etwa U-förmig, wobei Schenkel des U im vorderen Bereich des Rollbrettes gelagert sind.

Nach einer Weiterbildung der Erfindung ist im vorderen Bereich des Rollbrettes ein mit dem Bügel zusammenwirkender Verriegelungsmechanismus vorgesehen, mittels dessen die beiden Endstellungen des Bügels fixiert werden können.

Weitere Vorteile und Einzelheiten der Erfindung ergeben sich aus der nachfolgenden detaillierteren Beschreibung anhand der Zeichnung. Es zeigt:
Figur 1 eine Seitenansicht des Rollbrettes im Zustand als Roller;
Figur 2 eine Ansicht des Rollbrettes der Figur 1 schräg von vorne gesehen;
Figur 3 eine Ansicht des Rollbrettes im Zustand als Skateboard gesehen schräg von vorne nach einem anderen Ausführungsbeispiel der Erfindung.

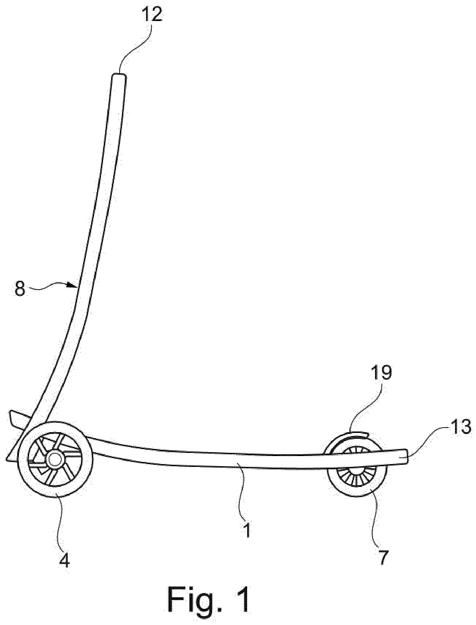

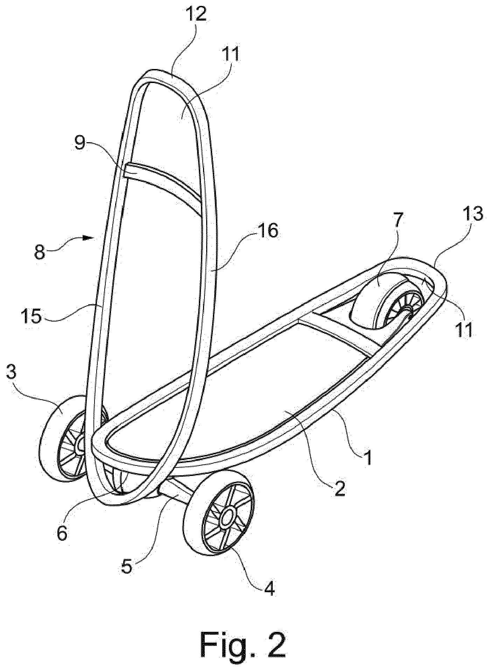

Das Rollbrett der Figuren 1 und 2 hat einen geschlossenen Rahmen 1, an dem ein Trittbrett 2 befestigt ist. An dem Rahmen 1 sind zwei Vorderrädern 3 und 4 angebracht und zwar über eine gemeinsame Vorderachse 5, die über ein Drehlager 6 an dem Rahmen 1 oder dem Trittbrett 2 befestigt ist. Die beiden Vorderräder 3 und 4 befinden sich, wie ihr Name schon sagt, im vorderen Bereich bezogen auf die normale Fahrtrichtung.

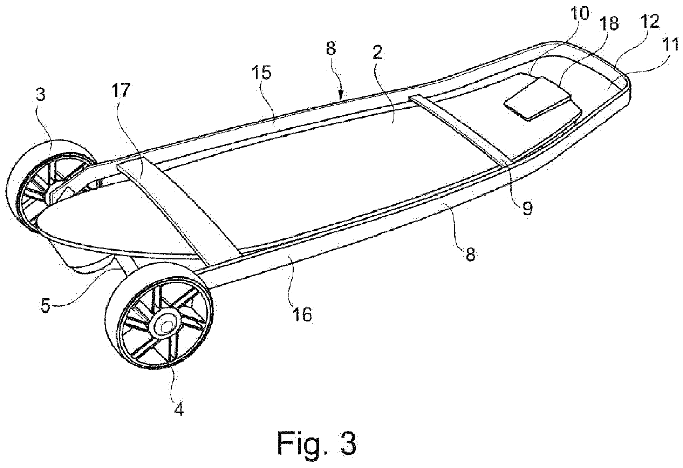

Am hinteren Bereich des Rahmens 1 ist ein einzelnes Hinterrad 7 angebracht, das gegebenenfalls (vgl. Figur 3) auch mit einer Radbremse 19 versehen sein kann.

Am vorderen Bereich des Rollbrettes ist ein schwenkbare Bügel 8 angebracht, der zwischen einer im wesentlichen senkrechten Stellung, die in den Figuren 1 und 2 dargestellt ist, und einer wesentlichen horizontalen Stellung, die in Figur 3 dargestellt ist, schwenkbar ist. In beiden Stellungen kann der Bügel 8 fixiert werden, beispielsweise durch einen federvorgespannten Raststift, der in zugeordnete Löcher einrasten kann.

Im Ausführungsbeispiel der Figuren 1 und 2 ist der Bügel 8 ein in Draufsicht etwa elliptischer geschlossener Bügel, der in seinem hinteren Bereich noch eine Querstrebe 9 aufweist, die in der im wesentlichen horizontalen Stellung des Bügels 8 (Fig. 3) auf dem Rahmen 1 und/oder dem Trittbrett 2 zur Auflage kommt.

Wie insbesondere aus Figur 3 zu erkennen ist, ragt der Bügel 8 in der horizontalen Stellung über das hintere Ende 10 des Trittbrettes 2 hinaus, sodass zwischen dem Trittbrett 2 und dem hinteren Ende 12 des Bügels 8 ein Freiraum 11 gebildet ist, durch den hindurch eine Hand greifen kann, die den Bügel 8 an dessen hinteren Ende 12 ergreifen kann, und der dort somit als ein Tragegriff dient.

Im Ausführungsbeispiel der Figuren 1 und 2 ist der Rahmen 1 nach hinten über das Hinterrad hinaus verlängert sodass der dortige hintere Bereich 13 gegenüber dem Hinterrad 7 einen Abstand aufweist der ebenfalls den Freiraum 11 bilden kann. Wahlweise kann dann der Bügel 8 so lang sein, dass sein hinteres Ende 12 mit dem hinteren Ende 13 des Bügels 8 kongruent liegt oder auch über das hintere Ende 13 hinausragt, sodass der Griffbereich 11 zwischen den beiden Enden 12 und 13 liegt.

Obwohl in der Zeichnung nicht eindeutig dargestellt, kann die Länge des Bügels 8 verstellt werden, indem Längsstreben 15 und 16 des Bügels 8 geteilt sind und teleskopartig ineinander gesteckt und in verschiedenen Stellungen verriegelt werden können.

Im Ausführungsbeispiel Figur 3 ist der Bügel in die zweite Stellung geschwenkt, in der er im Wesentlichen parallel zu dem Trittbrett 2 liegt. Bei diesem Ausführungsbeispiel ist der Rahmen fortgelassen und die Räder 3, 4 sind unmittelbar am Trittbrett 2 gehalten.

Weiter ist abweichend vom Ausführungsbeispiel der Figuren 1 und 2 bei diesem Ausführungsbeispiel der Figur 3 der Bügel 8 im vorderen Bereich nicht geschlossen. Vielmehr sind seine beiden Längsstrebens 15 und 16 im vorderen Bereich unmittelbar mit der Vorderachse 5 verbunden. Weiter hat bei diesem Ausführungsbeispiel der Bügel 8 im vorderen Bereich noch eine weitere Querstrebe 17, die im Wesentlichen der Stabilität dient.

Bei der Variante Figur 3 ist am hinteren Ende des Trittbrettes eine Lasche 18 ausgebildet, die das Hinterrad überdeckt, womit die Lasche 18 als Hinterradbremse dient. Alternativ kann, wie in Figur 1 dargestellt, auch ein eigenständiges Bremselement 19 vorgesehen sein, das das Hinterrad 7 zu einem Teil überdeckt und das an dem Rahmen 1 oder dem Trittbrett 2 befestigt ist.

## Patentansprüche

1. Umwandelbares Rollbrett mit einer Trittbrett (2) und einem Griff (8), der mit dem Trittbrett (2) verbunden ist und zwischen zwei Endpositionen, nämlich einer ersten Rollerstellung und einer zweiten, verstauten Stellung schwenkbar ist, wobei sich der Griff (8) in der Rollerstellung von dem Trittbrett nach oben erstreckt und von einem auf der Trittbrett (2) stehende Benutzer erfasst werden kann und wobei die Oberseite des Trittbretts (2), wenn sich der Griff (8) in der zweiten verstauten Stellung befindet, für einen Benutzer des Trittbretts (2) frei zugänglich ist, **dadurch gekennzeichnet, dass** der Griff in Form eines Bügels (8) ausgebildet ist, der eine Länge aufweist, die größer ist als die Länge des Trittbretts (2), und zwar um einen solchen Betrag, dass im heruntergeklappten Zustand des Bügels (8) zwischen der Hinterseite des Rollbrettes und dem Bügel (8) ein Freiraum (11) gebildet ist, der so groß ist, dass durch ihn hindurch der Bügel (8) von einer Hand erfasst werden kann.

2. Rollbrett nach Anspruch 1, **dadurch gekennzeichnet, dass** der Bügel (8) eine Querstrebe (9) aufweist, die im heruntergeklappten Zustand auf der Oberseite des Trittbretts (2) aufliegt, sodass die heruntergeklappte Stellung des Bügels (8) eindeutig definiert ist.

3. Rollbrett nach Anspruch 1 oder 2, **dadurch gekennzeichnet, dass** der Bügel (8) die Form eines Gabelbaumes hat.

4. Rollbrett nach Anspruch 1 oder 2, **dadurch gekennzeichnet, dass** der Bügel (8) in etwa U-förmig ist, wobei Schenkel (15, 16) des U im vorderen Bereich des Trittbretts (2) gelagert sind.

5. Rollbrett nach einem der mehreren Ansprüche 1-4, **dadurch gekennzeichnet, dass** im vorderen Bereich des Trittbretts (2) ein mit dem Bügel (8) zusammenwirkender Verriegelungsmechanismus vorgesehen, mittels dessen die beiden Endpositionen des Bügels (8) fixierbar sind.
